Europäisches Patentamt

European Patent Office

Office européen des brevets

(19)

(11) Publication number: **0 096 522**
**B1**

# EUROPEAN PATENT SPECIFICATION

(12)

(45) Date of publication of patent specification: **20.01.88**

(21) Application number: **83303094.3**

(22) Date of filing: **27.05.83**

(51) Int. Cl.⁴: **C 04 B 26/02, C 04 B 26/04,**
**C 04 B 26/06, C 04 B 26/14,**
**C 04 B 26/28, C 08 L 31/04**

(54) Mouldable composition and shaped product produced therefrom.

(30) Priority: **09.06.82 GB 8216748**
**22.04.83 GB 8310996**

(43) Date of publication of application:
**21.12.83 Bulletin 83/51**

(45) Publication of the grant of the patent:
**20.01.88 Bulletin 88/03**

(84) Designated Contracting States:
**AT BE CH DE FR GB IT LI LU NL SE**

(56) References cited:
**DE-A-2 607 568**
**DE-C- 843 469**
**FR-A-2 210 651**
**GB-A-2 000 787**
**US-A-4 059 551**

(73) Proprietor: **IMPERIAL CHEMICAL INDUSTRIES PLC**
**Imperial Chemical House Millbank**
**London SW1P 3JF (GB)**

(72) Inventor: **Raistrick, James Hugh**
**71 Ashbourne Avenue**
**Runcorn Cheshire (GB)**

(74) Representative: **Walmsley, David Arthur**
**Gregson et al**
**Imperial Chemical Industries PLC Legal**
**department: Patents PO Box 6 Bessemer Road**
**Welwyn Garden City Hertfordshire AL7 1HD (GB)**

Courier Press, Leamington Spa, England.

# 0 096 522

## Description

This invention relates to mouldable composition and to a shaped product produced from the composition, particularly a shaped product having high flexural strength.

According to the present invention there is provided a mouldable composition having a dough-like consistency and which is capable of being shaped by plastics or rubber processing techniques and which comprises a homogeneous mixture of

(a) at least one particulate material insoluble in water and which is substantially unreactive with water,

(b) at least one water-soluble organic polymeric material, and

(c) water,

characterised in that the composition also comprises an additive capable of reacting with the polymeric material to insolubilise the material with respect to water, and in that components (a), (b) and (c) are present in the composition, in proportions by volume of the composition, of respectively 40 to 90%, 2 to 25%, and not more than 30%.

In a further embodiment of the invention there is provided a shaped product produced by shaping and setting of the thus shaped composition of the invention. Setting of the shaped composition of the invention is effected by causing or allowing the additive in the composition to react wioh the polymeric material to insolubilise the polymeric material with respect to water, and removing water from the shaped composition.

In US—A—4059551 there is described an aqueous non-hydraulic mortar composition which comprises a film forming water-dispersible room temperature cross-linkable polymer and a water-insoluble filler. The utility of the composition which is disclosed is as a composition for use in the setting and grouting of ceramic tile. Utility as a composition which is capable of being shaped by plastics or rubber processing techniques is not disclosed.

In producing the composition of the invention the components thereof should be thoroughly mixed so as to form a homogeneous mixture.

For example, the components of the composition are preferably mixed under conditions of high shear, for example in a bladed high shear mixer. If desired, and where the composition has a suitable consistency, a composition so formed may be further mixed under conditions of high shear by passing the composition repeatedly through the nip between a pair of rollers which may be rotating at the same or different peripheral speeds.

Mixing may be effected at elevated temperature in order, for example, to reduce the viscosity of the composition and thus aid the mixing. However, the elevated temperature, and the time at the elevated temperature, should not be such as to result in premature setting of the composition nor in excessive loss of water from the composition by evaporation.

The homogeneous composition of the invention contains a proportion of water, up to 30% by volume, such that the composition has a dough-like consistency, and the composition may be shaped by techniques known in the plastics or rubber processing art. For example, where the composition has a dough-like consistency it may be shaped by extrusion, e.g. into a rod or tube shape or by injection moulding into a desired shape, or it may be calendered to produce a sheet-like form. The composition may also be shaped by compression moulding of the composition in a suitably shaped mould. Compositions having a dough-like consistency are desirable as it is possible to use plastics or rubber processing equipment with such compositions, such compositions contain a relatively low proportion of water to remove from the composition in setting, and the products produced from such composition are generally of higher flexural strength.

The temperature at which shaping of the composition may be effected may depend on the nature of the components of the composition and their relative proportions. Where the composition is to be shaped under relatively high pressure the composition may be shaped at or near ambient temperature.

However, we have found that, particularly where the composition has the characteristics of a thermoplastic, it may be desirable, or even necessary, in order to readily effect the shaping process, to use an elevated temperature in order effectively to shape the composition. A suitably elevated temperature may be chosen by means of simple experiment.

In the setting step the polymeric material is insolubilised by reaction with the additive and water is removed.

The conditions under which setting of the composition may be effected will depend on the nature of the components of the composition, and in particular on the nature of the polymeric material and on the nature of the additive reactive therewith. Suitable conditions for use in effecting the setting reaction will be disclosed hereafter in respect of compositions containing specific organic polymeric materials and additives reactive therewith. Setting of the shaped composition may be effected at or near ambient temperature or it may be effected at elevated temperature, for example at a temperature in excess of 50°C. A temperature of up to 100°C or even greater may be used. Elevated temperatures may be desirable in order to initiate reaction of the additive with the polymeric material, or at least to increase the rate of this reaction. The elevated temperature, and the length of time at such elevated temperature, should not be such as to result in substantial reduction in the strength of the product, which may be brought about, for example, by degradation of the polymeric material at elevated temperature.

2

The product produced by setting of a shaped composition of the invention may have a high flexural strength, for example, a flexural strength in excess of 40 MPa. The product may even have a flexural strength in excess of 100 MPa.

Where particularly high flexural strength products are to be produced it is preferred that the components of the composition of the invention are selected such that a test composition comprising 63% by volume of particulate material, 7% by volume of water-soluble or water dispersible organic polymeric material, and 30% by volume of water, when extruded in a capillary rheometer at an extrusion pressure up to a maximum of 500 atmospheres undergoes an increase of at least 25%, and preferably at least 50%, in shear stress when a ten-fold increase in the shear rate of the test composition is effected when the shear rates as measured are within the range 0.1 to 5 second$^{-1}$. Compositions satisfying the criteria of the test give products having good packing of the particles therein.

A capillary rheometer in which the test composition is extruded comprises a piston in a cylindrical barrel and a capillary orifice through which the test composition may be extruded.

The shear stress in kN cm$^{-2}$ is defined by

$$\frac{Fd}{LD^2}$$

and the shear rate in second$^{-1}$ by

$$\frac{2vD^2}{15d^3}$$

where D is the diameter of the barrel of rheometer in cm, v is the rate of travel of the piston in the barrel of the rheometer in cm min$^{-1}$, d is the diameter of the capillary of the rheometer in cm, L is the length of the capillary of the rheometer in cm, and F is the force in kN applied to the piston of the rheometer. In general, D will be in the range 1 to 3 cm, d in the range 0.2 to 0.5 cm, and L in the range 5d to 20d.

The particulate material in the test composition should not be of a size so great nor of such a shape that the particulate material itself inhibits passage of the composition through the capillary of the rheometer. For use in the capillary rheometer test particulate material having a size, or a combination of sizes, which results in a readily extrudable composition having a readily determinable shear stress will be chosen, and a size in the range up to 100 μm will generally be suitable. It may be necessary to choose a particular size, or a combination of sizes, for the particulate material in this range in order to produce a test composition which satisfies the criteria of the capillary rheometer test. The composition, and product, of the invention are not limited to particulate material having a size in this range.

A product produced by setting of a composition of the invention will be of higher flexural strength where the particulate material and organic polymeric material together are selected so that the test composition satisfies the aforementioned criteria of the capillary rheometer test than is the case where the particulate material and the organic polymeric material selected are such that the test composition does not satisfy the aforementioned criteria. For example, where the organic polymeric material and the particulate material are selected so that the test composition satisfies the aforementioned criteria a product produced from a composition containing these materials will have a flexural strength higher than that of

(1) a product produced from a composition containing the same organic polymeric material and a different particulate material which in combination do not satisfy the criteria of the capillary rheometer test, and

(2) a product produced from a composition containing the same particulate material and a different organic polymeric material which in combination do not satisfy the criteria of the capillary rheometer test, although the ultimate strength of the product will depend on the inherent strength of organic polymeric material and on the bonding to the particulate material.

Suitable combinations of particulate material and organic polymeric material which in the test composition satisfy the aforementioned capillary rheometer test will be disclosed hereinafter.

In general, the greater is the change in shear stress observed when the shear rate is increased tenfold the greater will be the flexural strength of the product produced from the composition of the invention, and for this reason it is preferred that the test composition undergoes an increase of at least 75% in shear stress when a ten-fold increase in shear rate of the test composition is effected.

The test composition for use in the capillary rheometer test should of course be thoroughly mixed and be sufficiently fluid that the composition itself is capable of being extruded in the capillary rheometer. In order that the test composition should have sufficient fluidity that shear rates in the range of 0.1 to 5 second$^{-1}$ are obtained it may be necessary to carry out the capillary rheometer test at elevated temperature, for example at a temperature greater than 50°C, e.g. at about 80°C. On the other hand, it may be necessary, particularly where the test composition is of high fluidity, to carry out the capillary rheometer test at a temperature below ambient temperature. In effecting the extrusion the composition should not

3

separate into its component parts, for example, water or polymer solution should not tend to separate from the composition.

In order to produce an extrudable composition it may be necessary to select a suitable molecular weight of organic polymeric material for use in the test composition. The composition of the invention is not of course limited to use of a material of the selected molecular weight. The molecular weight is selected merely for the purposes of the test.

For particularly high flexural strength products it is preferred that not more than 2%, and more preferably not more than 0.5%, of the total volume of the product comprises pores having a maximum dimension exceeding 100 µm, preferably 50 µm, and more preferably 15 µm, as measured by the method of quantitative microscopy. These pore size criteria do not include pores which may be present in the particulate material, for example, where the particulate material comprises hollow particles.

The production of such a preferred product is assisted by application of high shear during mixing of the composition, which may be effected in the substantial absence of air, for example under vacuum, and/or by application of at least a moderate pressure, e.g. an applied pressure of 1 to 5 MPa in the shaping step, particularly with a dough-like composition.

Quantitative microscopy is a technique well known in the art. A surface of a sample of the product is polished to produce a plane surface on the sample, the sample is washed to remove the polishing debris from the surface, and the surface is illuminated to ensure that the holes in the surface are contrasted with the plane parts of the surface, and the surface is viewed by means of an optical microscope, typically at a magnification of ×100, and the holes exceeding 100 µm, or 50 µm or 15 µm in size, are determined, as described in "Quantitative Microscopy" by De Hoff and Rhines, McGraw Hill 1968. Sufficient area of the surface of the sample should be viewed to reduce the statistical error, and usually, 1000 holes are counted. The sample is then subjected to further polishing in order to expose another surface and the optical examination is repeated. In general ten such surfaces are examined.

It is also preferred, for additional improvements in flexural strength, that the total volume of pores in the product, expressed as a proportion of the apparent volume of the product, including the pores, does not exceed 20%. Porosities not exceeding 15%, and even porosities not exceeding 10% are more preferred. The porosity may even be less than 2%. These porosity criteria exclude pores which may be present in the particulate material, for example, where the particulate material comprises hollow particles.

Low porosity is a feature of products produced from compositions in which the organic polymeric material and the particulate material are selected so as to satisfy the criteria of the capillary rheometer test.

In the composition of the invention the particulate material is insoluble in water and is substantially unreactive with water. Although we do not exclude use of particulate material which may be very slightly reactive with water we do not include within the scope of the invention hydraulic material such as hydraulic cements which react with water and which set in the presence of water.

The dimensions of the particles of the particulate material may vary over a broad range. Where the particulate material has a small size, however, undesirably large proportions of water may be required in order to produce a composition which is readily mouldable, and for this reason it is preferred, although not essential, that the median particle size is preferably greater than 0.3 µm, more preferably greater than 3 µm, the median particle size may be as great as 2 to 3 cm, or even higher.

The particulate material may comprise a plurality of particle sizes. For example, the particulate material may comprise a first fraction and a second fraction of size less than that of the first fraction. The use of such a plurality of particle sizes results in good packing of particles in the product and also may lead to a reduction in the proportion of organic polymeric material which otherwise may be required.

The composition may include, fibrous material. Although the fibrous material may be in the form of random, chopped fibre, difficulty may be experienced in incorporating such fibrous material into the composition. For this reason the fibrous material is preferably in the form of a mat, which may be woven or non-woven. The mat may be pressed into the composition of the invention, or it may be formed in situ, e.g. by filament winding.

The particulate material may be an inorganic material.

Mixtures of different particulate materials may be used.

The particulate material may, for example, be a metal oxide, a metal nitride or a metal carbide, or it may be a non-metallic material or a compound of a non-metallic element, for example a non-metallic oxide, carbide or nitride. The particulate material may be for example a siliceous material.

The choice of particulate material will be determined at least in part by the properties desired in the product of the invention.

For example, where a high modulus material having abrasion resistance is desired then the particulate material may be silicon carbide or aluminium oxide.

Where it is desired to produce a relatively inexpensive product the particulate material may for example be a siliceous material, e.g. sand.

Titanium dioxide is a particularly useful material where a white product is desired. Titanium dioxide may be used in combination with other particulate material in order to mask colour which may be produced by such other particulate material.

The particulate material may be a coloured pigment material, which may be organic, and which may be

4

0 096 522

used in relatively small proportion, in combination with other particulate material, in order to impart a suitable colour to the product of the invention.

Where thermal and/or electrical conductivity is desired in the product the particulate material may be a metal, for example iron, aluminium or copper. Iron is a suitable particulate material where magnetic properties are desired in the product.

Where low density products, and products having thermal and acoustic insulation properties are desired, the particulate material may itself be in the form of hollow spheres, for example hollow glass spheres.

Where the composition of the invention contains fibrous material the material may be for example glass fibre, carbon fibre, metallic fibre, or it may be a fibre of an organic polymer, for example a polyolefin, e.g. polypropylene, or a polyamide, e.g. nylon, or a polyester, e.g. polyethylene terephthalate. The use of fibrous material leads to increased toughness and impact strength in the products of the invention.

The particulate material may be composed in whole or in part of laminae, for example, it may be a siliceous mineral in the form of laminae, e.g. talc or bentonite. Such particulate materials in the form of laminae may be used to improve the processing characteristics of the composition, particularly the extrusion characteristics.

The particulate material may be present in the composition of the invention in a proportion of 40 to 90% by volume. It is preferred to use a relatively high proportion of particulate material, for example, a proportion in the range 60 to 90% by volume. Such compositions may contain a relatively low proportion of organic polymeric material, which is generally more expensive than the particulate material. The organic polymeric material will generally be capable of burning and it is of advantage that the product of the invention contains a relatively low proportion of such material. Also, compositions containing a high proportion of particulate material will generally contain a relatively low proportion of water. This is of advantage as there is then a lower proportion of water to remove from the composition during the setting of the composition. High proportions of particulate material may be desirable where a special effect is required, e.g. thermal conductivity.

The organic polymeric material in the mouldable composition of the invention should be water-soluble or water-dispersible. A function of the organic polymeric material is to aid in the processing of the composition, e.g. to aid in the production of a composition which is readily moulded, e.g. a composition of dough-like consistency, and to provide shape-retaining properties to the product of the invention. It is preferred that the organic polymeric material is soluble in water, rather than water-dispersible, and that the polymeric material is film-forming and contains groups, for example, hydroxyl or carboxylic acid groups, which have an affinity for the particulate material.

Examples of organic polymeric materials include hydroxypropyl methyl cellulose, polyethylene oxide, polyethylene glycol, polyacrylamide, and polyacrylic acid. A particularly preferred organic polymeric material, which with a number of different particulate materials in the form of a test composition satisfies the criteria of the aforementioned capillary rheometer test, is a hydrolysed polymer or copolymer of a vinyl ester, e.g. a hydrolysed vinyl acetate polymer or copolymer. The polymer may be a copolymer of vinyl acetate and a monomer copolymerisable therewith, but it is preferably a hydrolysed poly(vinyl acetate).

The degree of hydrolysis of the vinyl acetate (co)polymer has a bearing on whether or not the (co)polymer in combination with a particulate material in the test composition satisfies the aforementioned criteria of the capillary rheometer test. In order that in the capillary rheometer test an increase of at least 25% in shear stress should be produced by the ten-fold increase in shear rate, it is preferred that the degree of hydrolysis of the vinyl acetate (co)polymer be at least 50% but not more than 97%, and more preferably in the range 70% to 90%, that is, it is preferred that at least 50% but not more than 97%, and more preferably 70% to 90% of the vinyl acetate units in the polymer or copolymer, are hydrolysed to the alcohol form.

For a given proportion of hydrolysed vinyl acetate (co)polymer in the mouldable composition of the invention the properties of the product produced therefrom are relatively insensitive to variations in the molecular weight of the hydrolysed vinyl acetate (co)polymer.

In the mouldable composition of the invention there is present 2 to 25% of organic polymeric material by volume of the composition. The ease of moulding of the composition generally improves with increase in the proportion of polymeric material in the composition, and a proportion of at least 7% by volume is preferred. On the other hand the polymeric material is generally more expensive than the particulate material, and it may also be capable of burning, and for these reasons a proportion of not more than 20% by volume of polymeric material is preferred.

The proportion of water in the mouldable composition has an effect on the properties of the product produced from the composition. In order that a product of high flexural strength may be produced from the composition the composition contains no more than 30% by volume of water. It is preferred to use as low a proportion of water as possible consistent with producing a composition which is shapeable. We prefer to use less than 20% by volume of water. In general it will be found necessary to use at least 5% by volume of water. However, a proportion of water may be used in the composition which is greater than that which would result in production of a very high strength product and some product strength may be sacrificed in order to produce a composition which is more readily shaped.

Where high green strength is desired in the moulded composition of the invention, that is before

5

setting of the composition, the composition may suitably comprise a gelling agent for the organic polymeric material, that is a compound which forms labile bonds with the organic polymeric material. An alternative way of achieving high green strength in the composition is to include in the composition a proportion of an organic polymeric material which is soluble in the water of the composition at elevated temperature but which forms a gel at low temperature, e.g. at or near ambient temperature. For example, the composition may also comprise a proportion of a substantially fully hydrolysed vinyl acetate (co)polymer, particularly a substantially fully hydrolysed poly vinyl(acetate), which is soluble in the water of the composition at elevated temperature but which forms a gel at ambient temperature.

An essential feature of the mouldable composition of the present invention is an additive capable of reacting with the organic polymeric material to insolubilise the material with respect to water.

The nature of this additive will depend on the particular organic polymeric material in the composition.

Where the organic polymeric material comprises a plurality of reactive functional groups the additive may be a material reactive with the functional groups under the conditions used in forming the product of the invention from the mouldable composition. In this case the insolubilisation of the organic polymeric material with respect to water may be achieved by cross-linking the material. For example where the polymeric material comprises a plurality of hydroxyl groups, e.g. as in a hydrolysed vinyl ester polymer or copolymer such as hydrolysed poly(vinyl acetate), the additive may be a compound of a polyvalent metal capable of reacting with the hydroxyl groups. Particular examples of suitable compounds of a polyvalent metal include compounds of aluminium, $Al_2(OH)_5NO_3$, and $Al_2(OH)_5$ halide, for example, $Al_2(OH)_5Cl$. Other examples of compounds of a polyvalent metal include $Zr(OH)_2Cl_2$, $(NH_4)_2Cr_2O_7$ and $Cr(OH)_{1.8}(NO_3)_{1.2}$.

Selection of suitable combinations of water-soluble or water-dispersible organic polymeric materials and insolubilising additives may be made by reacting mixtures of such materials and additives and testing the product of reaction for water insolubility.

In effecting setting of the composition to produce the shaped product of the invention the additive in the composition is reacted with the polymeric material to insolubilise the material and water is removed from the composition. Where the additive is a polyvalent metal compound reaction is suitably effected at elevated temperature. For example, the temperature may be greater than 100°C, which temperature serves to remove the water in the composition. A temperature of, for example, up to 250°C may be used.

Where the polymeric material comprises a plurality of hydroxyl groups the additive capable of reacting with the polymeric material to insolubilise the material with respect to water may itself be an organic compound reactive with the hydroxyl groups, for example, a dialdehyde, e.g. glyoxal.

In this case a suitable reaction temperature is ambient temperature. However, elevated temperatures are suitably used, e.g. up to about 100°C, in order to remove the water from the composition and to accelerate the reaction.

In the composition of the invention the proportion of additive capable of reacting with the polymeric material will depend on the particular organic polymeric material and the particular additive in the composition.

In general the composition will contain a proportion of additive in the range 5 to 100% by volume of the organic polymeric material in the composition, e.g. 10 to 50% by volume.

It is preferred to select a proportion of additive which is sufficient not merely to insolubilise the organic polymeric material with respect to water but which reacts with the polymeric material to produce a product which swells at most only to a limited extent in water, for example, which takes up not more than 50% by weight of water when the product of reaction of the organic polymeric material and the insolubilising additive is soaked in water. Suitable proportions may be selected by test on mixtures of organic polymeric material and insolubilising additive.

In a particularly preferred embodiment of the invention the composition of the invention also comprises an additive capable of effecting coupling between the polymeric material and the surface of the particulate material in the composition.

Although products having high flexural strength may be produced from compositions of the invention which do not contain such an additive capable of effecting coupling it has been found that such products may suffer a substantial loss in flexural strength when contacted with water. Where the composition from which the product is produced contains such an additive capable of effecting coupling the loss of flexural strength of the product when the product is contacted with water, if any, is very much reduced.

The coupling additive which may suitably be used in a mouldable composition will depend on the nature of the particulate material and the organic polymeric material in the composition.

For example, known coupling agents may be used as the coupling additive, for example, silane coupling agents, e.g. epoxy silanes in the case where the particulate material is siliceous and the polymeric material is reacted with glyoxal.

Where the particulate material is non-siliceous it may be coated with a siliceous material in order to assist coupling to a coupling agent.

The particulate material may be pre-treated with the additive capable of effecting coupling, or the additive may merely be mixed with the composition of the invention.

It is preferred that the additive capable of insolubilising the organic polymeric material be the same as the additive capable of effecting coupling between the polymeric material and the particulate material.

For example, where the particulate material is siliceous, e.g. sand, or is alumina, and the additive capable of reacting with the organic polymeric material is a polyvalent metal compound, it has been found that certain of the latter compounds are also capable of effecting coupling between the particulate material and the organic polymeric material. Suitable additives to fulfil both these functions include $Al_2(OH)_5Cl$, $(NH_4)_2Cr_2O_7$, $Cr(OH)_{1.8}(NO_3)_{1.2}$ and $Al_2(OH)_5NO_3$.

In general the additive capable of effecting coupling, when different from the additive capable of reacting with the organic polymeric material to insolubilise the latter material with respect to water, will be present in the composition in a relatively low proportion, although the proportion required may depend on the particle size of the particulate material. For example, the additive may be present in a proportion of 0.01 to 3% by volume of the particulate material in the composition.

The invention is illustrated by the following Example in which all parts are parts by volume, unless otherwise stated.

Example 1

96 parts of 60 μm median diameter ground sand (BIS HFP5), 32 parts of 3 μm median diameter ground sand BIS M500), and 22 parts of hydrolysed poly(vinyl acetate) (degree of hydrolysis 88%, degree of polymerisation 2000, Gohsenol GH 17S Nippon Gohsei) were thoroughly mixed in a bladed mixer, 4 parts of resorcinol dissolved in 15 parts of water were mixed with 40 parts of an aqueous solution containing 30 parts of water and 10 parts of aluminium hydroxy chloride the solution containing 12.1% w/w Al and 8.75 w/w Cl, the latter solution having a viscosity of 18 cps, and the resultant solution was added to the ground mixture with stirring to form a crumble.

The crumble was then charged to a twin-roll mill the rollers of which were heated to a temperature of 60°C and the crumble was formed into plastic sheet on the mill, the sheet being passed repeatedly through the nip between the rolls. The milling was continued for 5 minutes during which time some of the water evaporated, and the resultant sheet was removed from the mill. The sheet contained 128 parts of sand, 22 parts of hydrolysed poly(vinyl acetate), 4 parts of resorcinol, 10 parts of aluminium hydroxy chloride, and 26.6 parts of water.

The sheet was then placed between two sheets of polyethylene terephthalate the faces of which were coated with mould release agent and the sheet was pressed in a hydraulic press at a temperature of 80°C and a pressure of 4 MPa until the sheet had a thickness of $2\frac{1}{2}$ mm.

The platens of the press were then cooled by flowing cold water through the platens, the sheet was removed from the press, and the sheets of polyethylene terephthalate were removed from the sheet.

Setting of the sheet was completed by placing the sheet between two flat pieces of wood, the sheet was allowed to stand for 2 days at 20°C, it was then heated at 80°C for 1 day, and finally it was heated at 180°C for 1 hour.

The sheet had a flexural strength of 130 MPa and a flexural modulus of 37 GPa.

After soaking in water for 1 day the sheet had a flexural strength of 102 MPa and a flexural modulus of 29 GPa.

The overall porosity of the sheet was 3.6% as measured by immersion in mercury (total volume of product including pores) and helium pyknometry (volume of product excluding pores).

Examples 2 to 8

In seven separate examples compositions of particulate material, water soluble organic polymeric material, insolubilising additive, and water were mixed in a bladed mixer, formed into a sheet on a twin-roll mill, pressed and heated, allowed to stand at 20°C, and finally heated, following the procedure described in Example 1.

Table 1 shows the components and the respective parts by volume of the components in the compositions when in sheet form, and also the percentage by volume of insolubilising additive as a proportion of the organic polymeric material, and

Table 2 shows the effect on the properties of the products produced from the compositions of change in the percentage by volume of insolubilising additive as a proportion of the organic polymeric material.

TABLE 1

| | Example | | | | | | |
|---|---|---|---|---|---|---|---|
| | 2 | 3 | 4 | 5 | 6 | 7 | 8 |
| Particulate material[1] | 125 | 125 | 125 | 125 | 125 | 125 | 125 |
| Organic polymeric material[2] | 26 | 26 | 26 | 26 | 26 | 26 | 16 |
| Insolubilising additive[3] | 6.48 | 8.33 | 10.2 | 12.0 | 13.9 | 15.7 | 20 |
| Water | 30.1 | 28.0 | 26.9 | 29.7 | 35.6 | 42.2 | 41.7 |
| % by volume of insolubilising additive as proportion of organic polymeric material | 24.9 | 32.0 | 39.2 | 46.2 | 53.5 | 60.4 | 125 |

[1]96 parts of 53 μm median diameter ground sand (BIS grade HPF5), 23 parts of 3 μm median diameter ground sand (BIS grade M500), and 6 parts of sub-micron titanium dioxide (BTP Tioxide grade R-CR2).

[2](Examples 2 to 7) 22 parts of Gohsenol GH17S as used in Example 1 and 4 parts of Polyviol VO3/140, hydrolysed poly(vinyl acetate), degree of hydrolysis 86—89% degree of polymerisation 300 (Wacker Chemie GMGH). (Example 8) 16 parts of Gohsenol GH23, hydrolysed poly(vinyl acetate), degree of hydrolysis 88%, degree of polymerisation 2600.

[3]Aluminium hydroxy chloride as used in Example 1 used as a 25% by volume solution in water.

TABLE 2

| | | Example | | | | | | |
|---|---|---|---|---|---|---|---|---|
| | | 2 | 3 | 4 | 5 | 6 | 7 | 8 |
| Flexural strength MPa | Dry | 116 | 125 | 129 | 125 | 111 | 112 | 13 |
| | Wet[4] | 31 | 69 | 86 | 100 | 69 | 66 | — |
| Flexural modulus GPa | Dry | 35 | 37 | 36 | 36 | 29 | 31 | 17 |
| | Wet[4] | 13 | 25 | 27 | 29 | 19 | 21 | — |

[4]After soaking in water for 1 day.

Examples 9 to 14

In six separate examples compositions of particulate material, water soluble organic polymeric material, insolubilising additive, and water were mixed in a bladed mixer, formed into a sheet on a twin-roll mill, pressed and heated, allowed to stand at 20°C, and finally heated, following the procedure described in Example 1, except that final heating was at 210°C for 1 hour.

Table 3 shows the components and the respective parts by volume of the components in the compositions, and also the percentage by volume of the organic polymeric material plus insolubilising additive in the compositions, and

Table 4 shows the effect on the properties of the products produced from the compositions of change in the proportion of organic polymeric material plus insolubilising additive in the compositions.

TABLE 3

| | | Example | | | | | |
|---|---|---|---|---|---|---|---|
| | | 9 | 10 | 11 | 12 | 13 | 14 |
| Particulate material[1] | | 125 | 125 | 125 | 125 | 125 | 125 |
| Organic polymeric material[2] | | 6.5 | 13 | 19.5 | 26 | 39 | 58.5 |
| Insolubilising additive[3] | | 1.16 | 2.33 | 3.49 | 4.66 | 6.98 | 10.47 |
| Water | | 23.2 | 25.7 | 28.9 | 30.2 | 37.5 | 48.2 |
| % by volume of organic polymeric material plus insolubilising additive | | 4.9 | 9.2 | 13.0 | 16.5 | 22.1 | 28.5 |

[1]A mixture of ground sand and titanuim dioxide as used in Examples 2 to 8.

[2]Hydrolysed poly(vinyl acetate). A mixture of Gohsenol GH17S and Polyviol VO3/140 in the relative proportion of 5.5:1 parts by volume, as used in Examples 2 to 7.

[3]Ammonium dichromate.

TABLE 4

| | | Example | | | | | |
|---|---|---|---|---|---|---|---|
| | | 9 | 10 | 11 | 12 | 13 | 14 |
| Flexural strength MPa | Dry | 16 | 26 | 54 | 75 | 92 | 109 |
| | Wet[4] | 10 | 17 | 53 | 87 | 91 | 98 |
| | Wet[5] | 12 | 17 | 36 | 80 | 85 | 106 |
| Flexural modulus GPa | Dry | 17 | 23 | 31 | 30 | 26 | 25 |
| | Wet[4] | 13 | 17 | 25 | 29 | 26 | 25 |
| | Wet[5] | 13 | 16 | 24 | 27 | 23 | 23 |

[4]After soaking in water for 1 day.

[5]After soaking in water for 7 days.

Examples 15 to 19

In five separate examples the procedure of Examples 9 to 14 was repeated except that the insolubilising additive which was used was aluminium hydroxy chloride (used as a 25% by volume solution in water), and final heating was at 180°C for 1 hour.

Table 5 shows the components and the respective parts by volume of the components in the compositions, and also the percentage by volume of the organic polymeric material plus insolubilising additive in the compositions, and

Table 6 shows the effect on the properties of the products produced from the compositions of change in the proportion of organic polymeric material plus insolubilising additive in the compositions.

TABLE 5

| | Example | | | | |
|---|---|---|---|---|---|
| | 15 | 16 | 17 | 18 | 19 |
| Particulate material | 125 | 125 | 125 | 125 | 125 |
| Organic polymeric material | 13 | 19.5 | 26 | 39 | 58.5 |
| Insolubilising additive | 5 | 7.5 | 10 | 15 | 22.5 |
| Water | 22.6 | 24.8 | 26.1 | 31.4 | 38.3 |
| % by volume of organic polymeric material plus insolubilising additive | 10.9 | 15.3 | 19.2 | 25.7 | 33.2 |

TABLE 6

| | | Example | | | | |
|---|---|---|---|---|---|---|
| | | 15 | 16 | 17 | 18 | 19 |
| Flexural strength MPa | Dry | 80 | 101 | 137 | 113 | 98 |
| | Wet[1] | 37 | 80 | 102 | 88 | 65 |
| | Wet[2] | 23 | 29 | 38 | 29 | 13 |
| Flexural modulus GPa | Dry | 34 | 33 | 37 | 27 | 25 |
| | Wet[1] | 20 | 26 | 29 | 23 | 16 |
| | Wet[2] | 13 | 9 | 9 | 4 | 1 |

[1]After soaking in water for 1 day.
[2]After soaking in water for 7 days.

Example 20

A composition as used in Example 17 was mixed in a bladed mixer, formed into a sheet on a twin-roll mill, pressed and heated at 80°C, and allowed to stand at 20°C, and dried at 80°C following the procedure described in Example 1.

The sheet was then cut into thirteen strips and eight of the strips were heated for $\frac{1}{2}$ hour at temperatures ranging from 150°C to 210°C, and five of the strips were heated for 3 hours at temperatures ranging from 150°C to 190°C.

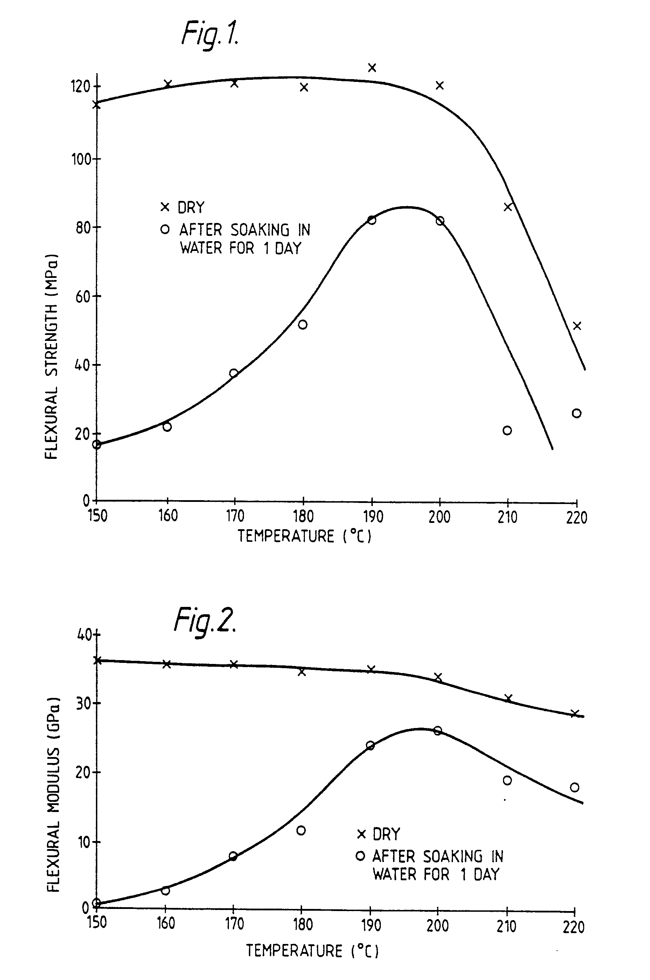

Figures 1 and 2 show the variation in flexural strength and flexural modulus respectively with temperature of heating for $\frac{1}{2}$ hour, and

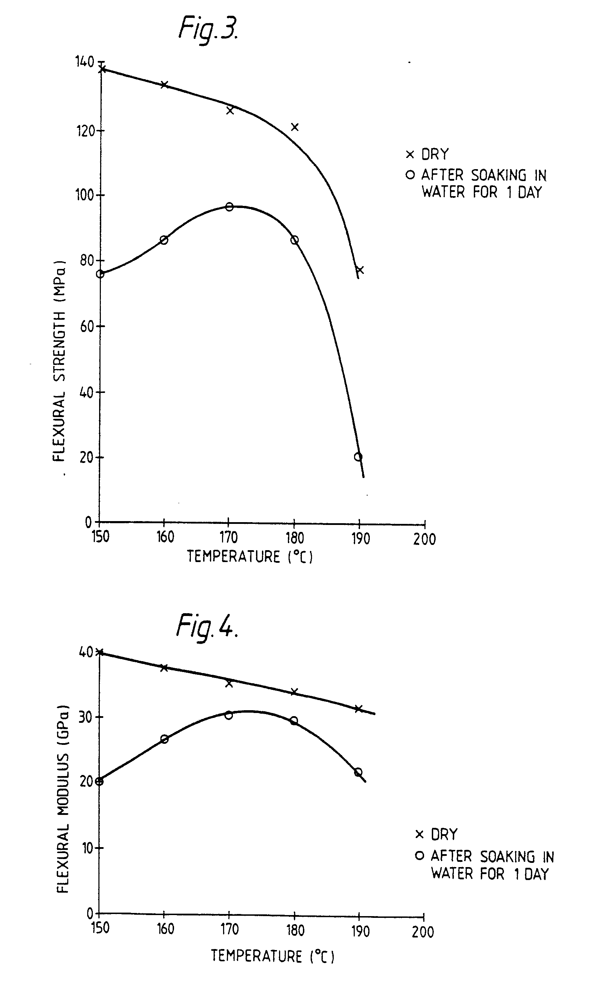

Figure 3 and 4 show the variation in flexural strength and flexural modulus respectively with temperature of heating for 3 hours.

Examples 21 to 25

In five separate examples the procedure of Example 1 was repeated with compositions each comprising 22 parts of Gohsenol GH17S and 4 parts of Polyviol VO3/40 as the organic polymeric material, aluminium hydroxy chloride as the insolubilising additive (used as a 25% by volume solution in water), and 6 parts of submicron titanium dioxide (as used in Examples 2 to 8) as part of the particulate material.

The compositions also each contained 119 parts of ground sand, the median diameter of the ground sand varying in separate examples.

Table 7 shows the components and the respective parts by volume of the components in the compositions, and also the median diameter of the ground sand (in microns) in the compositions, and

Table 8 shows the effect on the properties of the products produced from the compositions of variation of the median diameter of the ground sand.

# 0 096 522

TABLE 7

|  | Example | | | | |
|---|---|---|---|---|---|
|  | 21 | 22 | 23 | 24 | 25 |
| Particulate material | 125 | 125 | 125 | 125 | 125 |
| Median diameter of ground sand $\mu m$ | 3 | 11 | 17 | 28 | 53 |
| Organic polymeric material | 26 | 26 | 26 | 26 | 26 |
| Insolubilising additive | 10 | 10 | 10 | 10 | 10 |
| Water | 41.9 | 35.6 | 36.6 | 35.9 | 35.9 |

TABLE 8

|  |  | Example | | | | |
|---|---|---|---|---|---|---|
|  |  | 21 | 22 | 23 | 24 | 25 |
| Flexural strength MPa | Dry | 115 | 145 | 122 | 115 | 115 |
|  | Wet[1] | 29 | 53 | 84 | 63 | 73 |
| Flexural modulus GPa | Dry | 28 | 29 | 30 | 32 | 31 |
|  | Wet[1] | 8 | 16 | 19 | 20 | 22 |

[1]After soaking in water for 1 day.

Examples 26 to 31

The procedure of Example 1 was repeated in six separate examples with compositions which each contained 22 parts of Gohsenol GH17S and 4 parts of Polyviol VO3/40 as the organic polymeric material (except Example 31), 10 parts of aluminium hydroxy chloride as the insolubilising additive (Example 31—3.63 parts) (used as a 25% by volume solution in water), and various proportions by volume of differing particulate materials.

Table 9 shows the components and the respective parts by volume of the components in the compositions, and,

Table 10 shows the properties of the products produced from the compositions.

11

TABLE 9

| | Example | | | | | |
|---|---|---|---|---|---|---|
| | 26 | 27 | 28 | 29 | 30 | 31 |
| Particulate material | 125[1] | 125[2] | 125[3] | 125[4] | 154.7[5] | 186.4[6] |
| Organic polymeric material | 26 | 26 | 26 | 26 | 26 | 9.5[7] |
| Insolubilising additive | 10 | 10 | 10 | 10 | 10 | 3.63 |
| Water | 19.6 | 19.4 | 20.1 | 19.9 | 26.6 | 38.7 |

[1] 96 parts of sand of 145 μm median diameter, 23 parts of ground sand of 3 μm median diameter, 6 parts of sub-micron diameter titanium dioxide.

[2] 96 parts of sand of 222 μm median diameter, 23 parts of ground sand of 3 μm median diameter, 6 parts of sub-micron diameter titanium dioxide.

[3] 96 parts of sand of 255 μm median diameter, 23 parts of ground sand of 3 μm median diameter, 6 parts of sub-micron diameter titanium dioxide.

[4] 96 parts of sand of 275 μm median diameter, 23 parts of ground sand of 3 μm median diameter, 6 parts of sub-micron diameter titanium dioxide.

[5] 96 parts of ground sand of 53 μm median diameter, 23 parts of ground sand of 3 μm median diameter, 6 parts of sub-micron titanium dioxide, and 29.7 parts of 600 μm diameter glass were added during twin-roll milling of the composition.

[6] 96 parts of sand of 145 μm median diameter, 23 parts of ground sand of 11 μm median diameter, 6 parts of sub-micron diameter titanium dioxide.

Twin-roll milling effected cold. After removal of the sheet from the twin-roll mill 61.4 parts of 1750 micron median diameter glass spheres were kneaded into the sheet and the sheet was pressed into a thickness of 8 mm.

[7] 8 parts of Gohsenol GH17S and 1.5 parts of Polyviol VO3/40.

TABLE 10

| | | Example | | | | | |
|---|---|---|---|---|---|---|---|
| | | 26 | 27 | 28 | 29 | 30 | 31 |
| Flexural strength MPa | Dry | 78 | 59 | 65 | 68 | 84 | 29 |
| | Wet[8] | 51 | 15 | 44 | 33 | 59 | — |
| Flexural modulus MPa | Dry | 28 | 25 | 24 | 27 | 38 | 23 |
| | Wet[8] | 21 | 11 | 19 | 16 | 27 | — |

[8] After soaking in water for 1 day.

Examples 32 to 38

The procedure of Example 1 was repeated in seven separate examples with compositions comprising the components and the parts by volume thereof as indicated in Table 11.

Table 12 shows the properties of the products produced from the compositions and the effect thereon of change in the nature of the particulate material in the composition.

12

TABLE 11

| | Example | | | | | | |
|---|---|---|---|---|---|---|---|
| | 32 | 33 | 34 | 35 | 36 | 37[12] | 38[12] |
| Particulate material | 128[1] | 125[2] | 128[3] | 125[4] | 128[5] | 128[6] | 128[7] |
| Organic polymeric material | 22[8] | 22[8] | 22[8] | 26[9] | 26[9] | 26[9] | 26[9] |
| Insolubilising additive | 10[10] | 10[10] | 10[10] | 10[10] | 10[10] | 4.66[11] | 4.66[11] |
| Water | 26.6 | 26.1 | 25.4 | 27.8 | 28.3 | 29.1 | 39.6 |
| Resorcinol | 4 | 4 | 4 | 0 | 0 | 0 | 0 |

[1]Ground sand as used in Example 1.
[2]96 parts of 150 grit alumina of 88 μm median diameter, 23 parts of 3F grit alumina of 12 μm median diameter, 6 parts of sub-micron diameter titanium dioxide.
[3]96 parts of 150 grit silicon carbide, 32 parts of 3F grit silicon carbide.
[4]96 parts of calcium carbonate of 60 μm median diameter, 23 parts of calcium carbonate of 5 μm median diameter, 6 parts of sub-micron diameter titanium dioxide.
[5]128 parts of polyvinyl chloride of 180 μm median diameter.
[6]128 parts of iron powder of 150 μm median diameter.
[7]128 parts of siliceous micropheres of 60 μm median diameter. (Grade 200/7, Fillite (Runcorn) Ltd.)
[8]Gohsenol GH17S as used in Example 1.
[9]22 parts of Gohsenol GH17S and 4 parts of polyviol VO3/140 as used in Examples 2 to 7.
[10]Aluminium hydroxy chloride (used as a 25% by volume solution in water).
[11]Ammonium dichromate.
[12]Final heating at 210°C and not 180°C as in Example 1.

TABLE 12

| | | Example | | | | | | |
|---|---|---|---|---|---|---|---|---|
| | | 32 | 33 | 34 | 35 | 36 | 37 | 38 |
| Flexural strength MPa | Dry | 130 | 113 | 136 | 71 | 51 | 46 | 39 |
| | Wet[13] | 102 | 60 | 59 | 3 | 25 | 19 | 38 |
| Flexural Modulus GPa | Dry | 37 | 48 | 62 | 32 | 2.3 | 21 | 7 |
| | Wet[13] | 29 | 24 | 18 | 0.1 | 1.9 | 7 | 6 |

[13]After soaking in water for 1 day.

Examples 39 to 45

The procedure of Example 1 was repeated in seven separate Examples with compositions each comprising 96 parts of ground sand of 53 μm median diameter, 23 parts of ground sand of 3 μm median diameter, and 6 parts of sub-micron titanium dioxide as the particulate material, 22 parts of Gohsenol GH17S and 4 parts of Polyviol VO3/140 (as used in Examples 2 to 7) as the water soluble organic polymeric material, and different insolubilising additives in the separate Examples.

Table 13 indicates the nature of the insolubilising additive and the parts by volume of the components of the compositions, and

Table 14 shows the properties of the products produced from the compositions and the effect thereon of the change in the nature of the insolubilising additive.

13

TABLE 13

| | Example | | | | | | |
|---|---|---|---|---|---|---|---|
| | 39 | 40[8] | 41[9] | 42[9] | 43 | 44[9] | 45[8] |
| Particulate material | 125 | 125 | 125 | 125 | 125 | 125 | 125 |
| Organic polymeric material | 26 | 26 | 26 | 26 | 26 | 26 | 26 |
| Insolubilising additive | 10.0[1] | 4.66[2] | 5.34[3] | 5.19[4] | 6.44[5] | 7.69[6] | 6.67[7] |
| Water | 26.1 | 30.2 | 29.5 | 30.7 | 31.4 | 30.3 | 27.5 |

[1] Aluminium hydroxy chloride (used as a 25% by volume solution in water).
[2] Ammonium dichromate, $(NH_4)_2Cr_2O_7$.
[3] Chromium hydroxy nitrate, $Cr(OH)_2NO_3$ (as an aqueous solution).
[4] Zirconium hydroxy chloride, $Zr(OH)_2Cl_2$ (as an aqueous solution).
[5] Zirconium hydroxy acetate, $Zr(OH)_2AC_2$ (as an aqueous solution).
[6] Aluminium nitrate, $Al(NO_3)_3$.
[7] Aluminium hydroxy nitrate $Al_2(OH)_5NO_3$.
[8] Final heating temperature 210°C.
[9] Final heating temperature 150°C.

The proportions by volume of insolubilising additive refer to the additive in an anhydrous form. The products of Examples 39, 40 and 45 had electrical conductivities of, respectively, $6.8\times10^{-14}$, $1.8\times10^{-14}$, and $2.5\times10^{-14}$ ohm$^{-1}$ cm$^{-1}$ at 26°C, indicating that the products are good electrical insulators.

TABLE 14

| | | Example | | | | | | |
|---|---|---|---|---|---|---|---|---|
| | | 39 | 40 | 41 | 42 | 43 | 44 | 45 |
| Flexural strength MPa | Dry | 137 | 75 | 55 | 112 | 107 | 12 | 111 |
| | Wet[10] | 102 | 87 | 23 | 30 | 10 | 0.4 | — |
| | Wet[11] | 38 | 80 | 9 | 12 | — | — | 96 |
| Flexural Modulus GPa | Dry | 37 | 30 | 29 | 32 | 30 | 11 | 37 |
| | Wet[10] | 29 | 29 | 10 | 4 | 0.4 | 0.3 | 34 |
| | Wet[11] | 9 | 27 | 4 | 0.4 | — | — | 31 |

[10] After soaking in water for 1 day.
[11] After soaking in water for 7 days.

Examples 46 to 49

In four separate Examples compositions were mixed in a Z-blade mixer equipped with an extruder discharge (Baker Perkins ME 08), a vacuum tight cavity connected to a reflux condenser, and a jacket through which heating oil was circulated.

In each Example the components of the compositions were mixed and heated until a dough was formed and the vapour pressure of water above the dough reached 1 atmosphere and refluxing occurred. In this manner air bubbles were removed from the doughs. The compositions were then extruded through the die of the extruder to form 13 mm diameter rods. In each example part of the rod was pressed into a sheet form whilst hot, dried and heated at 180°C for 1 hour to form a sheet product. The flexural strengths and moduli of the sheets were measured. In each example part of the rod was cooled and the flexural moduli of the rods in dough form were determined.

Table 15 shows the components of the compositions and the parts by volume of the components, and Table 16 shows the properties of the products produced from the compositions.

14

## 0 096 522

TABLE 15

| | Example | | | |
|---|---|---|---|---|
| | 46 | 47 | 48 | 49 |
| Particulate material[1] | 1000 | 1000 | 1000 | 1000 |
| Organic polymeric material | 208[2] | 132[3] | 132[3] | 44[3] |
| Insolubilising additive[4] | 80 | 80 | 80 | 80 |
| Water | 356 | 356 | 356 | 356 |
| Resorcinol | 0 | 0 | 32 | 32 |
| Hydrolysed poly(vinyl acetate[5] | 0 | 44 | 44 | 132 |

[1]768 parts of ground sand of 53 μm median diameter, 184 parts of ground sand of 3 μm median diameter, and 48 parts of submicron titanium dioxide.

[2]176 parts of Gohsenol GH17S and 32 parts of polyviol VO3/140 as used in Examples 2 to 7.

[3]Gohsenol GH17S.

[4]Aluminium hydroxy chloride (used as a 25% by volume aqueous solution).

[5]Gohsenol NH18S (99% hydrolysed, degree of polymerisation 1800).

TABLE 16

| | | Example | | | |
|---|---|---|---|---|---|
| | | 46 | 47 | 48 | 49 |
| Flexural strength MPa | Dry Wet[6] | 110 108 | 80 22 | 74 28 | 41 10 |
| Flexural modulus GPa | Dry Wet[6] | 32 28 | 29 8 | 30 8 | 20 2 |
| Flexural modulus of dough MPa | | 10 | 25 | 62 | 90 |

[6]After soaking in water for 1 day.

It can be seen that use of 99% hydrolysed poly(vinyl acetate) as a gelling agent, which is soluble in hot water but which forms a gel in cold water, and also the use of resorcinol assists in production of a stiff dough of high flexural modulus.

Examples 50 to 54

In five separate examples the procedure of Example 1 was repeated except that particulate material of Examples 2 to 8 was used, the organic polymeric material was Gohsenol C500 (hydrolysed poly(vinyl acetate), degree of hydrolysis 96%, degree of polymerisation 1700), ammonium dichromate was used in place of the aqueous solution of aluminium hydroxy chloride, and the final temperature of heating was 210°C.

Table 17 shows the components of the compositions and the parts by volume of the components, and Table 18 shows the properties of the products produced from the compositions.

15

TABLE 17

| | Example | | | | |
|---|---|---|---|---|---|
| | 50 | 51 | 52 | 53 | 54 |
| Particulate material | 125 | 125 | 125 | 125 | 125 |
| Organic polymeric material | 26 | 26 | 26 | 26 | 26 |
| Insolubilising additive | 0.93 | 1.86 | 3.26 | 4.66 | 6.06 |
| Water | 41.7 | 39.9 | 38.9 | 39.2 | 38.6 |
| % by volume of insolubilising additive as a proportion of organic polymeric material | 3.58 | 7.15 | 12.5 | 17.9 | 23.3 |

TABLE 18

| | | Example | | | | |
|---|---|---|---|---|---|---|
| | | 50 | 51 | 52 | 53 | 54 |
| Flexural strength | Dry | 52 | 50 | 74 | 70 | 64 |
| | Wet[1] | 15 | 40 | 88 | 92 | 72 |
| | Wet[2] | 9 | 18 | 80 | 74 | 50 |
| Flexural modulus | Dry | 21 | 22 | 30 | 29 | 31 |
| | Wet[1] | 4 | 14 | 27 | 25 | 27 |
| | Wet[2] | 3 | 7 | 25 | 26 | 25 |

[1]After soaking in water for 1 day.
[2]After soaking in water for 7 days.

Examples 55 to 58
In four separate examples compositions were mixed in a Z-blade mixer following the procedure of Examples 46 to 49.

In Examples 55 and 56 the refluxing, extrusion, pressing and heating procedure of Examples 46 and 49 was followed. In Example 57 the refluxing, extrusion, pressing, and heating procedure of Examples 46 to 49 was followed except that the dough in the extruder was allowed to cool to 60°C before extrusion. In Example 58 the dough was removed from the mixer after cooling to 20°C and the dough was pressed into sheet, dried, and heated at 180°C for 1 hour.

Table 19 shows the components of the compositions and the parts by volume of the components, and Table 20 shows the properties of the products produced from the compositions.

# 0 096 522

## TABLE 19

| | Example | | | |
|---|---|---|---|---|
| | 55 | 56 | 57 | 58 |
| Particulate material[1] | 1000 | 1000 | 1000 | 1000 |
| Organic polymeric material | 208[2] | 208[2] | 132[3] | 132[3] |
| Insolubilising additive[4] | 80 | 80 | 80 | 80 |
| Water | 290 | 356 | 552 | 859 |
| Resorcinol | 0 | 0 | 32 | 32 |
| Hydrolysed poly(vinyl acetate)[5] | 0 | 0 | 44 | 44 |

[1]Ground sand and titanium dioxide as used in Examples 46 to 49.
[2]176 parts of Gohsenol GH17S and 32 parts of Polyviol VO3/140 as used in Examples 2 to 7.
[3]Gohsenol GH17S.
[4]Aluminium hydroxy chloride (used as a 25% by volume aqueous solution).
[5]Gohsenol NH18S as used in Examples 47 to 49.

## TABLE 20

| | | Example | | | |
|---|---|---|---|---|---|
| | | 55 | 56 | 57 | 58 |
| Flexural strength MPa | Dry | 144 | 110 | 72 | 31 |
| | Wet[6] | 130 | 108 | 27 | 8 |
| | Wet[7] | — | 29 | 16 | 6 |
| Flexural modulus GPa | Dry | 43 | 32 | 26 | 12 |
| | Wet[6] | 40 | 28 | 11 | 2 |
| | Wet[7] | — | 8 | 4 | 1 |

[6]After soaking in water for 1 day.
[7]After soaking in water for 7 days.

Example 59

22 parts of hydrolysed poly(vinyl acetate) (Gohsenol NL05, degree of hydrolysis 99%, degree of polymerisation=500) was stirred into 250 parts of cold water and then heated to 90°C with continual stirring.

To this solution 4 parts of resorcinol, a solution containing 30 parts of water and 10 parts of aluminium hydroxychloride as used in Example 1, 96 parts of 53 μm median diameter ground sand (HPF5), 23 parts of 3 μm median diameter ground sand (M500) and 6 parts of sub-micron titanium dioxide (R-CR2) were added. Stirring and heating were continued until the composition was a viscous liquid which contained 42.5% by volume water.

This liquid was poured into a flat bottomed dish and allowed to cool. This resulted in hardening of the composition which was then removed from the dish, dried slowly, cut into strips and cured by heating to 180°C for an hour. When dry the product had a flexural strength of 27.5 MPa and a flexural modulus of 6.4 GPa.

When hot, the liquid composition was suitable for application to surfaces by painting or dipping.

Example 60

In order to demonstrate the mouldability of a composition of the invention six separate samples of a composition prepared as described in Example 1 each in the form of a disc having a thickness of 3.45 mm

17

and a diameter of 12 mm were sealed in envelopes of polyester film. Each sample was pressed between the platens of a press, which platens were closed at a rate of 1 mm/min, until a force of 500 Newtons was applied. The platens of the press, and the samples, were heated at temperatures of 20°C, 40°C, 60°C, 70°C, 80°C and 100°C respectively.

The pressure was then released and the samples were examined by measuring the diameters of the discs. The extent of the increase in diameter of the discs, if any, gives an indication of the mouldability of the composition at the particular temperature.

The increase in the diameter of the discs which was observed was, respectively, 0 mm, 0 mm, 3.5 mm, 5 mm, 6 mm, and 9 mm, indicating an increase in mouldability with increase in temperature.

Examples 61 and 62

In both examples compositions were made from 75 parts of 53 µm median diameter ground sand (HPF5) and 25 parts of 3 µm median diameter ground sand (M500) as particulate material, 13.7 parts of butyraldehyde and 3.1 parts of glyoxal (used as a 40% by weight aqueous solution) as insolubilising additive, 0.3 parts of hydrochloric acid (used as a 33% by volume aqueous solution), 19 parts of Gohsenol GH17S hydrolysed poly(vinyl acetate) as the organic polymeric material, and a total of 37.2 parts of water.

In Example 61 the particulate material had been coated with 0.8 parts of gamma-glycidoxy propyltrimethoxysilane as a coupling agent, whereas in Example 62 the particulate material was uncoated.

Both compositions were processed by first mixing 31.3 parts of water, the hydrochloric acid solution, and 0.52 parts of the solution of glyoxal. This mixture was vigorously mixed with the particulate material and allowed to react for 20 minutes. The polymeric material was then mixed in, followed by the butyraldehyde and the rest of the glyoxal. The resultant crumbles were then twin-roll milled on water cooled rollers and the resultant sheets were placed between two sheets of polyester film, the faces of which were coated with mould release agent, and pressed in a hydraulic press at a temperature of 60°C for 16 hours. The platens of the press were then cooled by flowing cold water through them, the sheets were removed from the press and the sheets of polyester were removed. Setting of the sheets was completed by placing them between two flat pieces of wood, allowing to stand for two days at 20°C, heating at 80°C for one day and then removing the sheets from between the wood and air drying at 80°C for seven days.

TABLE 21

| | | Example | |
|---|---|---|---|
| | | 61 | 62 |
| Flexural strength MPa | Dry | 89 | 59 |
| | Wet[1] | 64 | 13 |
| | Wet[2] | 26 | 10 |
| Flexural modulus GPa | Dry | 30 | 19 |
| | Wet[1] | 20 | 3 |
| | Wet[2] | 10 | 2 |

[1]After soaking in water for 1 day.
[2]After soaking in water for 7 days.

Examples 63 and 64

In a first experiment (Example 63) a composition as described in Example 17 was formed into a sheet of 2 mm thickness and dried and heated following the procedure described in Example 1 to produce a product.

In a second experiment (Example 64) a composition as described in Example 17 was formed into three 2 mm thick sheets, a nylon fibre mat (K 190 Fothergill and Harvey Limited, 1270 decitex) was sandwiched between each pair of sheets. The resultant composite was pressed to a thickness of about 5 mm and dried and heated following the procedure described in Example 1. The resultant product contained 7.9% by volume of nylon.

The properties of the products are shown in Table 22.

**0 096 522**

TABLE 22

| | Example | |
|---|---|---|
| | 63 | 64 |
| Flexural strength MPa | 137 | 101 |
| Flexural modulus GPa | 37 | 34 |
| Fracture energy KJm$^{-2}$ | 0.27 | 14.6 |
| Impact energy KJm$^{-2}$ | 2.0 | 21.7 |

Example 65

In order to demonstrate the effect of water on the product of reaction of the organic polymeric material and the insolubilising additive 64.5 parts of Gohsenol GH17S was stirred into 700 parts of cold water and the mixture was heated and stirred until the polymer had dissolved. 29.3 parts of aluminium hydroxychloride dissolved in 87.9 parts of water was then added and the mixture was put into a fan oven at 80°C for six days. During this time the air bubbles in the solution rose to the surface and some of the water evaporated. The concentrated, bubble-free solution was transferred to a flat bottomed dish and was dried out at 20°C by being left for two weeks in a cabinet containing dessicant. A tough, flexible sheet was obtained which was cut into strips and then dried at 80°C. Some of the strips were cured by heating to 150°C for one hour and some by heating to 180°C for one hour. The strips were weighed and were then put into a 100% relative humidity atmosphere for four days and then immersed in water. Table 23 shows the percentage increase in the weights of these strips as a consequence of water absorption.

TABLE 23

| | % increase in dry weight | |
|---|---|---|
| Sample treatment | Cured at 150°C | Cured at 180°C |
| 4 days at 100% RH | 27.4 | 18.2 |
| 1 day water soak | 80.8 | 32.9 |
| 2 days water soak | 83.2 | 32.9 |
| 13 days water soak | 88.8 | 33.0 |

Examples 66 and 67

A composition as described in Example 55 was extruded into the form of a 13 mm diameter rod.

A part of the rod was hot pressed into the form of a 2.5 mm thick sheet and the sheet was dried and heated for 1 hour at 180°C (Example 66).

In Example 67 the above procedure was repeated except that after production of the rod it was allowed to stand at room temperature for 60 days prior to pressing.

The properties of the products produced are shown in Table 24.

TABLE 24

| | | Example | |
|---|---|---|---|
| | | 66 | 67 |
| Flexural strength MPa | Dry | 136 | 131 |
| | Wet[1] | 86 | 93 |
| Flexural modulus GPa | Dry | 41 | 39 |
| | Wet[1] | 24 | 28 |

[1]After immersion in water for 1 day.

19

Example 68

In twelve separate experiments compositions of 63 parts of particulate material, 7 parts of organic polymeric material, and 30 parts of water were mixed in a bladed mixer, formed into sheet on a twin-roll mill, and the thus formed composition was extruded through a capillary rheometer of the type hereinbefore described. The effect of change in shear rate on the shear stress was determined and the results are shown in Table 25.

TABLE 25

| Experiment | Particulate material | Organic polymeric material | Change in shear rate sec$^{-1}$ | Change in shear stress kN cm$^{-2}$ | % Change in shear stress |
|---|---|---|---|---|---|
| A[1] | $SiO_2$[5] | Hydrolysed poly vinyl acetate 88% Gohsenol GH17S | 0.247—2.47 | 0.0053—0.0129 | +143 |
| B[1] | $SiO_2$[5] | Hydrolysed poly vinyl acetate 50% Polyviol W45/450 | Could not be extruded in rheometer | | |
| C[1] | $SiO_2$[5] | Hydrolysed poly vinyl acetate 80% Gohsenol KH17S | 0.247—2.47 | 0.00193—0.00553 | +187 |
| D[2] | $SiO_2$[5] | Hydrolysed poly vinyl acetate 96% Gohsenol C500 | 0.247—2.47 | 0.00376—0.00587 | +56 |
| E[3] | $SiO_2$[6] | Hydrolysed poly vinyl acetate 99% Gohsenol NH18S | 0.247—2.47 | 0.0337—0.0376 | +12 |
| F[1] | SiC[7] | Gohsenol GH17S | 0.247—2.47 | 0.00343—0.00905 | +164 |
| G[1] | $Al_2O_3$[7] | Gohsenol GH17S | 0.247—2.47 | 0.00553—0.0136 | +146 |
| H[1] | $Al_2O_3$[7] | Polyacrylic acid Versicol S11 | 0.247—2.47 | 0.0053—0.0106 | +100 |
| I[1] | $SiO_2$[5] | Polyacrylic acid Versicol S11 88% | Could not be extruded in rheometer | | |
| J[1] | $SiO_2$[5] | Polyacrylamide Cyanamer P250 | 0.123—1.23 | 0.0337—0.0289 | −14 |
| K[1] | $SiO_2$[5] | Hydroxy propyl-methyl cellulose HPM 5000P | 0.123—1.23 | 0.0414—0.0414 | 0 |
| L[4] | $SiO_2$[5] | Polyethylene oxide Polyox WSR M750 | 0.123—1.23 | 0.0809—0.0578 | −29 |

[1]Extruded at 20°C.

[2]Extruded at 55°C.

[3]Milled at 85°C, extruded at 80°C.

[4]Extruded at 80°C.

[5]53 μm median diameter ground sand (BIS HPF5) sieved to remove particles larger than 100 μm.

[6]47.25 parts of ground sand as in 5 above and 15.75 parts of 3 μm diameter ground sand (BIS M500).

[7]42 parts of 88 μm median diameter particles sieved to remove particles larger than 100 μm and 21 parts of 4.5 μm median diameter particles.

Compositions of experiments A, C, D and F to H satisfied the criteria of the aforementioned capillary rheometer test, whereas compositions of experiments B, E and I to L did not. These experiments show the criticality of selection of the type of organic polymeric material, and furthermore, where the latter material is hydrolysed poly vinyl acetate, the criticality of the selection of the degree of hydrolysis of the latter polymeric material.

Examples 69 to 74

In six separate examples compositions of particulate material were mixed with organic polymeric material, and water in a bladed mixer, formed into a sheet on a twin-roll mill at 60°C, allowed to stand at 20°C for 1 day, and at 80°C for five days.

Table 26 shows the proportions by volume of the components of the compositions, and Table 27 the properties of products produced from the compositions.

TABLE 26

| | Example | | | | | |
|---|---|---|---|---|---|---|
| | 69[1] | 70[1] | 71[1,6] | 72[1] | 73[6,7,8] | 74[1] |
| Particulate material | 125 | 125 | 125 | 125 | 136 | 125 |
| Organic polymeric material | 26[2] | 26[3] | 26[4] | 26[5] | 22[8] | 26[8] |
| Insolubilising additive | 0 | 0 | 0 | 0 | 0 | 0 |
| Water | 29.4 | 32.7 | 60.0 | 33.1 | 44 | 29 |

[1] 96 parts of 53 µm median diameter ground sand (BIS HPF5), 23 parts of 3 µm diameter ground sand (BIS M500) and 6 parts of sub-micron titanium dioxide (R-CR2).
[2] Gohsenol GH17S.
[3] Polyacrylamide Cyanamer P-250.
[4] Hydroxypropyl methyl cellulose Celacol HPM 5000P.
[5] Polyethylene oxide Polyox WSR N750.
[6] Milled on rollers at 20°C.
[7] 102 parts of 88 µm median diameter alumina and 34 parts of 12 µm median diameter alumina.
[8] Polyacrylic acid (Versicol S11).

TABLE 27

| | | Example | | | | | |
|---|---|---|---|---|---|---|---|
| | | 69 | 70 | 71 | 72 | 73 | 74 |
| Flexural strength MPa | Dry | 102 | 64 | 13 | 1 | 89 | 60 |
| Flexural modulus GPa | Dry | 28 | 32 | 3 | 1 | 77 | 39 |

It can be seen that those products prepared from compositions which contained combinations of particulate materials and organic polymeric materials which in a capillary rheometer test satisfied the criteria of the test had properties superior to the properties of products prepared from particulate materials and organic polymeric materials which in combination did not satisfy the criteria of the test.

For the purposes of demonstration of this superiority the compositions exemplified did not contain an additive capable of insolubilising the organic polymeric material.

Examples 75 to 77

The effect of pore size distribution on the properties of products made from compositions of the

21

invention was determined in three separate examples. Example 75 is the same as Example 55, Example 76 was prepared following the procedure of Example 55 except that air was entrained into the composition during the mixing process, and example 77 was prepared following the procedure of Example 17 except that a pressure of only 1 MPa was applied at 80°C and the pressure was released at this temperature.

The properties of the products, and the pore size distributions of the products, are shown in Table 28.

TABLE 28

|  | Example | | |
|---|---|---|---|
|  | 75 | 76 | 77 |
| % of product volume of pores >15 μm | 0.9 | 2.4 | 8.5 |
| % of product volume of pores >50 μm | 0.6 | 2.2 | 3.8 |
| % of product volume of pores >100 μm | 0.2 | 1.3 | 2.6 |
| Flexural strength MPa | 144 | 139 | 96 |
| Flexural modulus GPa | 43 | 40 | 25 |

Example 78

The procedure of Example 73 was repeated with a composition of 102 parts of 88 μm median diameter alumina, 34 parts of 12 μm median diameter alumina, 26 parts of polyacrylic acid 4.66 parts of ammonium dichromate and 33.1 parts of water. Polyacrylic acid and alumina are a combination of organic polymeric material and particulate material which satisfy the criteria of the capillary rheometer test, see Experiment H of Table 25.

The product produced from the composition had a flexural strength of 54 MPa and a flexural modulus of 44 GPa.

Example 79

The procedure of Example 35 was repeated except that the composition contained 32.3 parts of water and 4.66 parts of ammonium dichromate was used in place of the aluminium hydroxy chloride of Example 35.

The product had a flexural strength of 51 MPa when dry and 57 MPa after soaking in water for 1 day, and a flexural modulus of 32 GPa when dry and 30 GPa after soaking in water for 1 day.

**Claims**

1. A mouldable composition having a dough-like consistency and which is capable of being shaped by plastics or rubber processing techniques and which comprises a homogeneous mixture of

(a) at least one particulate material insoluble in water and which is substantially unreactive with water,

(b) at least one water-soluble organic polymeric material, and

(c) water,

characterised in that the composition also comprises an additive capable of reacting with the polymeric material to insolubilise the material with respect to water, and in that components (a), (b) and (c) are present in the composition, in proportions by volume of the composition, of respectively 40 to 90%, 2 to 25% and not more than 30%.

2. A mouldable composition as claimed in claim 1 characterised in that the composition comprises 5% to 20% by volume of water.

3. A composition as claimed in claim 1 or claim 2 characterised in that a test composition comprising 63% by volume of particulate material, 7% by volume of water-soluble or water-dispersible organic polymeric material, and 30% by volume of water, when extruded in a capillary rheometer at an extrusion pressure up to a maximum of 500 atmospheres undergoes an increase of at least 25% in shear stress when a ten-fold increase in the shear rate of the test composition is effected when the shear rates are measured are within the range 0.1 to 5 second$^{-1}$.

4. A mouldable composition as claimed in claim 3 characterised in that the test composition undergoes

22

an increase of at least 75% in shear stress when a tenfold increase in shear rate of the test composition is effected.

5. A mouldable composition as claimed in any one of claims 1 to 4 characterised in that the median particle size of the particulate material is greater than 0.3 µm.

6. A mouldable composition as claimed in claim 5 characterised in that the median particle size of the particulate material is greater than 3 µm.

7. A mouldable composition as claimed in any one of claims 1 to 6 characterised in that the composition comprises a particulate material having a plurality of particle sizes.

8. A mouldable composition as claimed in any one of claims 1 to 7 characterised in that the particulate material is an inorganic material.

9. A mouldable composition as claimed in claim 8 characterised in that the particulate material comprises an inorganic oxide.

10. A mouldable composition as claimed in claim 9 characterised in that the inorganic oxide is selected from aluminium oxide and silica.

11. A mouldable composition as claimed in any one of claims 1 to 10 characterised in that the composition comprises particulate material in a proportion of 60% to 90% by volume.

12. A mouldable composition as claimed in any one of claims 1 to 11 characterised in that the composition comprises organic polymeric material in a proportion of 7% to 20% by volume.

13. A mouldable composition as claimed in any one of claims 1 to 12 characterised in that the organic polymeric material comprises a hydrolysed polymer or copolymer of a vinyl ester.

14. A mouldable composition as claimed in claim 13 characterised in that the organic polymeric material comprises hydrolysed poly(vinyl acetate).

15. A mouldable composition as claimed in claim 14 characterised in that the degree of hydrolysis of the hydrolysed poly(vinyl acetate) is in the range 50% to 97%.

16. A mouldable composition as claimed in any one of claims 1 to 15 characterised in that the additive capable of reacting with the organic polymeric material to insolubilise the polymeric material with respect to water is present in a proportion of 5% to 100% by volume of the organic polymeric material.

17. A mouldable composition as claimed in any one of claims 1 to 16 characterised in that the additive capable of reacting with the organic polymeric material to insolubilise the polymeric material with respect to water is selected from aluminium hydroxy chloride, ammonium dichromate, and aluminium hydroxy nitrate.

18. A mouldable composition as claimed in any one of claims 1 to 17 characterised in that the composition comprises an additive capable of effecting coupling between the organic polymeric material and the surface of the particulate material.

19. A mouldable composition as claimed in claim 18 characterised in that the additive capable of insolubilising the organic polymeric material is the same as the additive capable of effecting coupling between the organic polymeric material and the particulate material.

20. A process for the production of a shaped product characterised in that a mouldable composition as claimed in any one of claims 1 to 19 is shaped, the additive in the composition is caused or allowed to react with the organic polymeric material in the composition to insolubilise the organic polymeric material with respect to water, and water is removed from the composition.

21. A process as claimed in claim 20 characterised in that the composition is shaped under applied pressure.

22. A process as claimed in claim 21 characterised in that the composition is shaped by compression moulding, by calendering or by extrusion.

23. A process as claimed in any one of claims 20 to 22 characterised in that reaction of the organic polymeric material with the additive reactive therewith is effected at a temperature in excess of 100°C.

24. A process as claimed in any one of claims 20 to 23 characterised in that the components of the mouldable composition are mixed under conditions of high shear.

25. A shaped product produced from a mouldable composition as claimed in any one of claims 1 to 19 characterised in that the composition is shaped, the additive in the composition is caused or allowed to react with the organic polymeric material in the composition to insolubilise the organic polymeric material with respect to water, and water is removed from the composition.

26. A shaped product as claimed in claim 25 characterised in that not more than 2% of the total volume of the product comprises pores having a maximum dimension exceeding 100 µm.

27. A shaped product as claimed in claim 26 characterised in that not more than 2% of the total volume of the product comprises pores having a maximum dimension exceeding 15 µm.

28. A shaped product as claimed in any one of claims 1 to 27 characterised in that total porosity of the product does not exceed 20%.

## Patentansprüche

1. Formbare Zusammensetzung, die eine teigartige Konsistenz hat und mit Hilfe von in der Kunststoff- oder Kautschukindustrie üblichen Verfahrenstechniken verformbar ist und ein homogenes Gemisch aus

(a) mindestens einem teilchenförmigen Material, das in Wasser unlöslich und mit Wasser praktisch nicht reaktiv ist,

(b) mindestens einem wasserlöslichen organischen polymeren Material und

(c) Wasser

aufweist, dadurch gekennzeichnet, daß die Zusammensetzung ferner einen Zusatzstoff aufweist, der mit dem polymeren Material zu reagieren vermag unter Unlöslichmachung des Materials gegenüber Wasser, und daß die Komponenten (a), (b) und (c) in der Zusammensetzung in auf das Volumen der Zusammensetzung bezogenen Mengen von 40 bis 90%, 2 bis 25% bzw. nicht mehr als 30% vorliegen.

2. Formbare Zusammensetzung nach Anspruch 1, dadurch gekennzeichnet, daß die Zusammensetzung 5 bis 20 Vol.-% Wasser aufweist.

3. Formbare Zusammensetzung nach Anspruch 1 oder 2, dadurch gekennzeichnet, daß eine Probe der Zusammensetzung mit einem Gehalt an 63 Vol.-% teilchenförmigem Material, 7 Vol.-% wasserlöslichem oder in Wasser dispergierbarem, organischen, polymerem Material und 30 Vol.-% Wasser beim Extrudieren in einem Kapillar-Rheometer bei einem Extrusionsdruck bis zu einem Maximum von 500 atm einer Zunahme der Scherspannung von mindestens 25% unterliegt bei Bewirkung einer zehnfachen Steigerung der Scherrate der Zusammensetzungsprobe, wenn die gemessenen Scherraten innerhalb des Bereichs von 0,1 bis 5 $s^{-1}$ liegen.

4. Formbare Zusammensetzung nach Anspruch 3, dadurch gekennzeichnet, daß die Zusammensetzungsprobe eine Zunahme der Scherspannung von mindestens 75% erfährt, wenn eine zehnfache Steigerung der Scherrate der Zusammensetzungsprobe bewirkt wird.

5. Formbare Zusammensetzung nach einem der Ansprüche 1 bis 4, dadurch gekennzeichnet, daß die mediane Partikelgröße des teilchenförmigen Materials größer als 0,3 µm ist.

6. Formbare Zusammensetzung nach Anspruch 5, dadurch gekennzeichnet, daß die mediane Partikelgröße des teilchenförmigen Materials größer als 3 µm ist.

7. Formbare Zusammensetzung nach einem der Ansprüche 1 bis 6, dadurch gekennzeichnet, daß die Zusammensetzung ein teilchenförmiges Material mit einer Vielzahl von Partikelgrößen aufweist.

8. Formbare Zusammensetzung nach einem der Ansprüche 1 bis 7, dadurch gekennzeichnet, daß das teilchenförmige Material ein anorganisches Material ist.

9. Formbare Zusammensetzung nach Anspruch 8, dadurch gekennzeichnet, daß das teilchenförmige Material ein anorganisches Oxid ist.

10. Formbare Zusammensetzung nach Anspruch 9, dadurch gekennzeichnet, daß das anorganische Oxid aus den Verbindungen Aluminiumoxid und Siliciumdioxid ausgewählt ist.

11. Formbare Zusammensetzung nach einem der Ansprüche 1 bis 10, dadurch gekennzeichnet, daß die Zusammensetzung teilchenförmiges Material in einer Menge von 60 bis 90 Vol.-% aufweist.

12. Formbare Zusammensetzung nach einem der Ansprüche 1 bis 11, dadurch gekennzeichnet, daß die Zusammensetzung organisches polymeres Material in einer Menge von 7 bis 20 Vol.-% aufweist.

13. Formbare Zusammensetzung nach einem der Ansprüche 1 bis 12, dadurch gekennzeichnet, daß das organische polymere Material ein hydrolysiertes Polymer oder Copolymer eines Vinylesters aufweist.

14. Formbare Zusammensetzung nach Anspruch 13, dadurch gekennzeichnet, daß das organische polymere Material hydrolysiertes Poly(vinylacetat) aufweist.

15. Formbare Zusammensetzung nach Anspruch 14, dadurch gekennzeichnet, daß der Hydrolysegrad des hydrolisierten Poly(vinylacetats) im Bereich von 50 bis 97% liegt.

16. Formbare Zusammensetzung nach einem der Ansprüche 1 bis 15, dadurch gekennzeichnet, daß der Zusatzstoff, der zur Umsetzung mit dem organischen polymeren Material unter Unlöslichmachung des polymeren Materials gegenüber Wasser befähigt ist, in einer Menge von 5 bis 100 Vol.-%, bezogen auf organisches polymeres Material, vorliegt.

17. Formbare Zusammensetzung nach einem der Ansprüche 1 bis 16, dadurch gekennzeichnet, daß der Zusatzstoff, der zur Umsetzung mit dem organischen polymeren Maerial unter Unlöslichmachung des polymeren Materials gegenüber Wasser befähigt ist, aus den Verbindungen Aluminiumhydroxychlorid, Ammoniumdichromat und Aluminiumhydroxynitrat ausgewählt ist.

18. Formbare Zusammensetzung nach einem der Ansprüche 1 bis 17, dadurch gekennzeichnet, daß die Zusammensetzung einen Zusatzstoff aufweist, der zur Bewirkung einer Verbindung zwischen dem organischen polymeren Material und der Oberfläche des teilchenförmigen Materials befähigt ist.

19. Formbare Zusammensetzung nach Anspruch 18, dadurch gekennzeichnet, daß der Zusatzstoff, der zur Unlöslichmachung des organischen polymeren Materials befähigt ist, der gleiche ist wie der Zusatzstoff, der zur Bewirkung einer Verbindung zwischen dem organischen polymeren Material und dem teilchenförmigen Material befähigt ist.

20. Verfahren zur Herstellung eines geformten Gegenstands, dadurch gekennzeichnet, daß eine formbare Zusammensetzung nach einem der Ansprüche 1 bis 19 verformt wird, der Zusatzstoff in der Zusammensetzung zur Reaktion gebracht oder reagieren gelassen wird mit dem organischen polymeren Material in der Zusammensetzung zur Unlöslichmachung des organischen polymeren Materials gegenüber Wasser, und das Wasser aus der Zusammensetzung entfernt wird.

21. Verfahren nach Anspruch 20, dadurch gekennzeichnet, daß die Zusammensetzung unter Anwendung von Druck verformt wird.

24

22. Verfahren nach Anspruch 21, dadurch gekennzeichnet, daß die Zusammensetzung durch Formpressen, Kalandrieren oder Extrusion verformt wird.

23. Verfahren nach einem der Ansprüche 20 bis 22, dadurch gekennzeichnet, daß die Umsetzung des organischen polymeren Materials mit dem damit reaktiven Zusatzstoff bei einer Temperatur von über 100°C bewirkt wird.

24. Verfahren nach einem der Ansprüche 20 bis 23, dadurch gekennzeichnet, daß die Komponenten der formbaren Zusammensetzung unter Bedingungen hoher Scherbeanspruchung vermischt werden.

25. Geformter Gegenstand, der aus einer formbaren Zusammensetzung nach einem der Ansprüche 1 bis 19 gewonnen ist, dadurch gekennzeichnet, daß die Zusammensetzung verformt wurde, der Zusatzstoff in der Zusammensetzung zur Reaktion gebracht oder reagieren gelassen wurde mit dem organischen polymeren Material in der Zusammensetzung zur Unlöslichmachung des organischen polymeren Materials in bezug auf Wasser, und Wasser aus der Zusammensetzung entfernt wurde.

26. Geformter Gegenstand nach Anspruch 25, dadurch gekennzeichnet, daß nicht mehr als 2% des Gesamtvolumens des Gegenstands Poren mit einer maximalen Dimension, die 100 μm übersteigt, aufweisen.

27. Geformter Gegenstand nach Anspruch 26, dadurch gekennzeichnet, daß nicht mehr als 2% des Gesamtvolumens des Gegenstands Poren mit einer maximalen Dimension, die 15 μm übersteigt, aufweisen.

28. Geformter Gegenstand nach einem der Ansprüche 1 bis 27, dadurch gekennzeichnet, daß die Gesamtporosität des Gegenstands 20% nicht übersteigt.

**Revendications**

1. Composition moulable ayant une consistance pâteuse et qui est capable d'être façonnée suivant les techniques de mise en oeuvre des matières plastiques ou du caoutchouc et qui comprend un mélange homogène

(a) d'au moins une matière particulaire insoluble dans l'eau et qui est sensiblement inerte à l'égard de l'eau,

(b) d'au moins une matière polymère organique soluble dans l'eau, et

(c) d'eau,

caractérisée en ce que la composition comprend aussi un additif capable de réagir avec la matière polymère pour insolubiliser celle-ci à l'égard de l'eau et en ce que les composants (a), (b) et (c) sont présents dans la composition, en proportions en volume de la composition, respectivement de 40 à 90%, 2 à 25% et 30% au maximum.

2. Composition moulable suivant la revendication 1, caractérisée en ce que la composition comprend 5 à 20% en volume d'eau.

3. Composition suivant la revendication 1 ou 2, caractérisée en ce qu'une composition d'épreuve comprenant 63% en volume de matière particulaire, 7% en volume de matière polymère organique soluble dans l'eau ou dispersable dans l'eau et 30% en volume d'eau, lorsqu'elle est extrudée dans un rhéomètre capillaire à une pression d'extrusion de 500 atmosphères au maximum, subit une augmentation d'au moins 25% de la contrainte de cisaillement lorsqu'une augmentation de dix fois de la vitesse de cisaillement de la composition d'épreuve est réalisée quand les vitesses de cisaillement telles que mesurées se situent dans l'intervalle de 0,1 à 5 secondes$^{-1}$.

4. Composition moulable suivant la revendication 3, caractérisée en ce que la composition d'épreuve subit une augmentation d'au moins 75% de la contrainte de cisaillement lorsqu'une augmentation de dix fois de la vitesse de cisaillement de la composition d'épreuve est réalisée.

5. Composition moulable suivant l'une quelconque des revendications 1 à 4, caractérisée en ce que la dimension médiane des particules de la matière particulaire est supérieure à 0,3 μm.

6. Composition moulable suivant la revendication 5, caractérisée en ce que la dimension médiane des particules de la matière particulaire est supérieure à 3 μm.

7. Composition moulable suivant l'une quelconque des revendications 1 à 6, caractérisée en ce que la composition comprend une matière particulaire ayant plusieurs granulométries.

8. Composition moulable suivant l'une quelconque des revendications 1 à 7, caractérisée en ce que la matière particulaire est une matière inorganique.

9. Composition moulable suivant la revendication 8, caractérisée en ce que la matière particulaire comprend un oxyde inorganique.

10. Composition moulable suivant la revendication 9, caractérisée en ce que l'oxyde inorganique est choisi entre l'oxyde d'aluminium et la silice.

11. Composition moulable suivant l'une quelconque des revendications 1 à 10, caractérisée en ce que la composition comprend la matière particulaire en une proportion de 60 à 90% en volume.

12. Composition moulable suivant l'une quelconque des revendications 1 à 11, caractérisée en ce que la composition comprend la matière polymère organique en une proportion de 7 à 20% en volume.

13. Composition moulable suivant l'une quelconque des revendications 1 à 12, caractérisée en ce que la matière polymère organique comprend un polymère ou copolymère hydrolysé d'un ester vinylique.

25

14. Composition moulable suivant la revendication 13, caractérisée en ce que la matière polymère organique comprend du poly(acétate de vinyle) hydrolysé.

15. Composition moulable suivant la revendication 14, caractérisée en ce que le degré d'hydrolyse du poly(acétate de vinyle) hydrolysé se situe dans l'intervalle de 50 à 97%.

16. Composition moulable suivant l'une quelconque des revendications 1 à 15, caractérisée en ce que l'additif capable de réagir avec la matière polymère organique pour insolubiliser la matière polymère à l'égard de l'eau est présent en une proportion de 5 à 100% en volume de la matière polymère organique.

17. Composition moulable suivant l'une quelconque des revendications 1 à 16, caractérisée en ce que l'additif capable de réagir avec la matière polymère organique pour insolubiliser la matière polymère à l'égard de l'eau est choisi entre l'hydroxy-chlorure d'aluminium, le dichromate d'ammonium et l'hydroxynitrate d'aluminium.

18. Composition moulable suivant l'une quelconque des revendications 1 à 17, caractérisée en ce que la composition comprend un additif capable d'effectuer un couplage entre la matière polymère organique et la surface de la matière particulaire.

19. Composition moulable suivant la revendication 18, caractérisée en ce que l'additif capable d'insolubiliser la matière polymère organique est le même que l'additif capable d'effectuer un couplage entre la matière polymère organique et la matière particulaire.

20. Procédé pour fabriquer un produit façonné, caractérisé en ce qu'on façonne une composition moulable suivant l'une quelconque des revendications 1 à 19, on fait ou on laisse réagir l'additif de la composition avec la matière polymère organique de la composition pour insolubiliser la matière polymère organique à l'égard de l'eau et on élimine l'eau de la composition.

21. Procédé suivant la revendication 20, caractérisé en ce que la composition est façonnée sous une pression exercée.

22. Procédé suivant la revendication 21, caractérisé en ce que la composition est façonnée par moulage par compression ou par calandrage ou bien par extrusion.

23. Procédé suivant l'une quelconque des revendications 20 à 22, caractérisé en ce que la réaction de la matière polymère organique avec l'additif réactif avec celle-ci est exécutée à une température supérieure à 100°C.

24. Procédé suivant l'une quelconque des revendications 20 à 23, caractérisé en ce que les composants de la composition moulable sont mélangés dans des conditions de cisaillement intense.

25. Produit façonné fabriqué à partir d'une composition moulable suivant l'une quelconque des revendications 1 à 19, caractérisé en ce que la composition a été façonnée, l'additif de la composition a été admis ou mis à réagir avec la matière polymère organique de la composition pour insolubiliser la matière polymère organique à l'égard de l'eau et l'eau a été éliminée de la composition.

26. Produit façonné suivant la revendication 25, caractérisé en ce que pas plus de 2% du volume total du produit comprennent des pores ayant une dimension maximum excédant 100 µm.

27. Produit façonné suivant la revendication 26, caractérisé en ce que pas plus de 2% du volume total du produit comprennent des pores ayant une dimension maximum excédant 15 µm.

28. Produit façonné suivant l'une quelconque des revendications 25 à 27, caractérisé en ce que la porosité totale du produit n'excède pas 20%.

**0 096 522**

*Fig.1.*

FLEXURAL STRENGTH (MPa)

× DRY
○ AFTER SOAKING IN
WATER FOR 1 DAY

TEMPERATURE (°C)

*Fig.2.*

FLEXURAL MODULUS (GPa)

× DRY
○ AFTER SOAKING IN
WATER FOR 1 DAY

TEMPERATURE (°C)

1

Fig.3.

Fig.4.